# EUROPEAN PATENT APPLICATION

(11) **EP 4 838 367 A2**
(43) Date of publication of application: **11.11.2026**
(21) Application number: 26206355.5
(22) Date of filing: 14.05.2021
(51) Int. Cl.: G06F 11/34

(54) **AUTOMATIC TUNING OF A HETEROGENEOUS COMPUTING SYSTEM**

(30) Priority: 15.05.2020 EP 20174913
(62) Document number(s) of the earlier application(s) in accordance with Art. 76 EPC: 21729215.0 / 4 150 450
(71) Applicant: ParTec AG, 81679 München (DE)
(72) Inventor: Frohwitter, Bernhard, 81679 Munchen (DE); Lippert, Thomas, 63473 Aschaffenburg (DE)
(74) Representative: Leske, Thomas

(57) **Abstract**

The present invention provides a method of configuring program parameters during run-time of a computing program for computation in a heterogeneous computing system. A compile program is processed in an autotuning system to optimize the parameters of an application for processing in a heterogeneous system comprising, for example CPU and GPU cores.

## Description

The present invention relates to computing systems having different types of processors and a technique for arranging for different tasks to be divided between the processors for parallel computation in an efficient manner.

Such heterogeneous computing systems include supercomputers (also termed high performance computers) which comprise both CPU (central processing unit) and GPU (graphic processing unit) cores. Further specialized computing units may also be catered for, such as FPGAs (field programmable gate arrays), DSPs (digital signal processors) and quantum computing units.

Individual computing tasks may be more suited for execution on one type of processor than another and arranging for different tasks to be processed in parallel may be a considerable task. The arranging of tasks for processing by the different units so as to optimize a degree of parallelization has been termed tuning. Tuning may either be "offline", performed prior to run-time, or "online", performed during run-time. While a program developer may be in a position to implement tuning using their skill and knowledge, such manual tuning is time consuming. Automatic tuning, or autotuning, is a desirable development.

Autotuning is described, for example in "Automatic Application Tuning for HPC Architectures" by Siegfried Benkner et al., Report from Dagstuhl Seminar 13401 29 September-4 October 2014, pp 214-243 at https://www.dagstuhl.de/13401 incorporated by reference for all purposes.

A problem with online autotuning is that a system user might experience increased run-times as the system implements different configurations during a search for an optimum configuration.

The present invention provides a method of performing online autotuning which is comparable with known online tuning techniques while reducing the required run-time.

The present invention provides a method of configuring program parameters during run-time of a computing program for computation in a heterogeneous computing system, the method comprising receiving a transformation of the computing program, the transformation comprising one or more computing applications; generating for each computing application one or tuning parameters, the one or more tuning parameters being categorized into classes; and for a computing application to be optimized, recurringly during run-time adjusting one or more tuning parameters of the computing application, executing the computing application using the adjusted one or more tuning parameters, obtaining a performance metric for the execution of the computing application using the adjusted one or more tuning parameters and determining if the adjusted one or more tuning parameters provide an improvement with respect to the performance metric and whether a termination criterion has been met for ending the adjusting, wherein an indicator characteristic of a dynamic state of the computing application being optimized is stored, the indicator being used in the optimization to determine whether a known optimization is available for the dynamic state indicated by the stored indicator.

In a further aspect, the invention provides a computing entity programmed to optimize a computing application by recurringly during run-time adjusting one or more tuning parameters of the computing application, executing the computing application using the adjusted one or more tuning parameters, obtaining a performance metric for the execution of the computing application using the adjusted one or more tuning parameters and determining if the adjusted one or more tuning parameters provide an improvement with respect to the performance metric and whether a termination criterion has been met for ending the adjusting, wherein an indicator characteristic of a dynamic state of the computing application being optimized is stored, the indicator being used in the optimization to determine whether a known optimization is available for the dynamic state indicated by the stored indicator.

Preferred embodiments of the invention will now be described, by way of example only, with reference to the accompanying drawings in which:
Fig. 1 shows a schematic representation of a compiler and an autotuning system according to the invention;
Fig. 2 is a schematic illustration of the autotuning system of Fig. 1;
Fig. 2a is an example of computer code for optimizing a number of threads during autotuning;
Fig. 2b is a schematic illustration of the autotuning system of the invention interacting with an application with feedback being passed to memory to update prediction and search states;
Fig. 3 is an illustration of the operation of a search strategy for autotuning in which an integer value of a configuration C is varied with time using mirror axes;
Fig. 4 is an example of computer code providing a search implementation interface;
Fig. 5 shows available state transitions in a Nelder-Mead search algorithm;
Fig. 6 shows a graphical representation of decomposing a global search space of a simplified heterogeneous mapping according to parameter classes;
Fig. 7 illustrates an example of decomposing the global search space using application developer supplied constraints;
Fig. 8 is an example of a search space graph for the parameter set T = {A; B; C; D; X; Y; Z; W}, where {A; B; C; D} are nominal and {W; X; Y; Z} are non-nominal;
Fig. 9. is an example of a hierarchical search for the parameters {A; B; C; D; X; Y; Z; W};
Fig. 10 is an example of partitioning and platform mapping of a schedule tree shown in Fig. 11;
Fig. 11 is an example of a schedule tree for matrix multiplication;
Fig. 12 is an example of a control flow structure of a loop supported by a system of the invention;
Fig. 13 shows code sections generated by target plugins with solid arrows denoting synchronous operations and dashed arrows asynchronous operations; and
Fig. 14 shows an example of allocation mapping for three arrays.

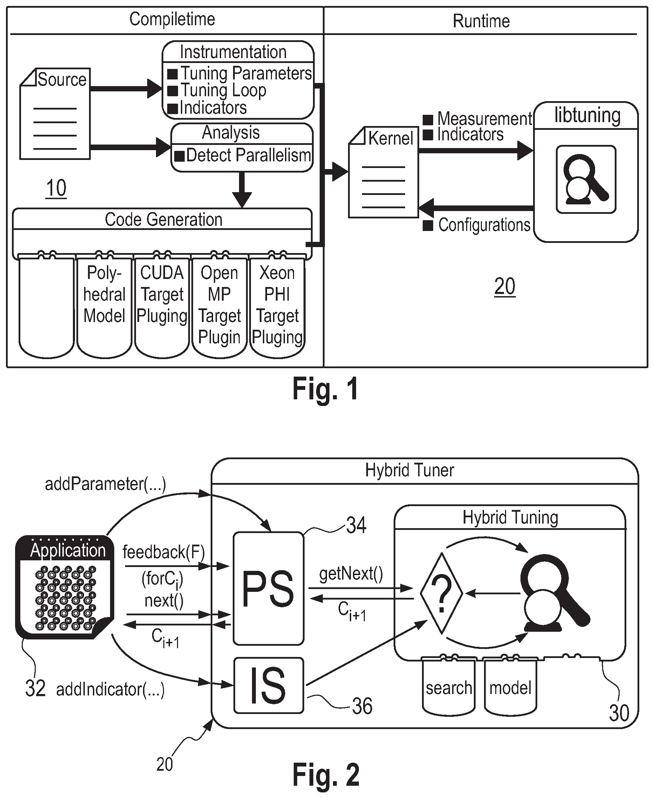

Fig. 1 shows a schematic diagram illustrating an implementation of autotuning according to the invention.

The implementation comprises a compiler 10 and a run-time autotuning system 20. The compiler is adapted to parallelize sequential applications for heterogeneous platforms (such as a system comprising CPUs and GPUs) with autotuning being performed during execution. The compiler 10 interacts with the run-time autotuning system 20 to provide online tuning, optimizing a distribution of tasks between CPU cores and GPU cores.

The compiler 10 and the autotuning system 20 will now be described individually.

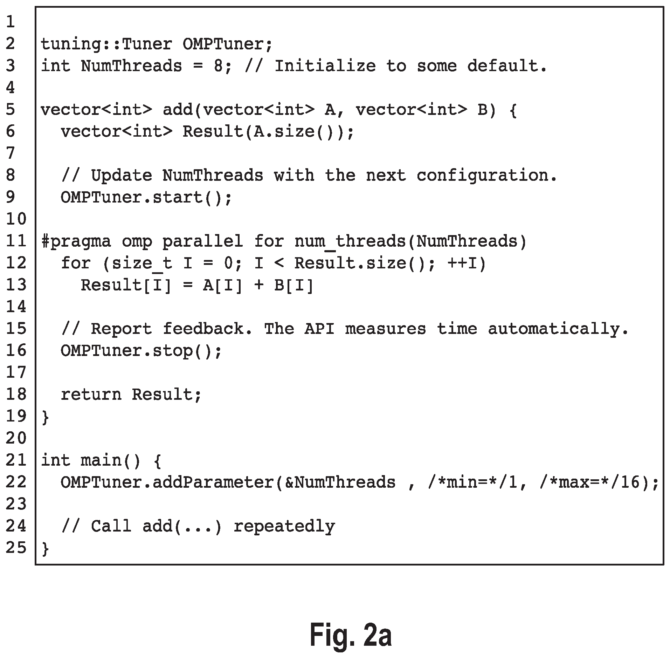

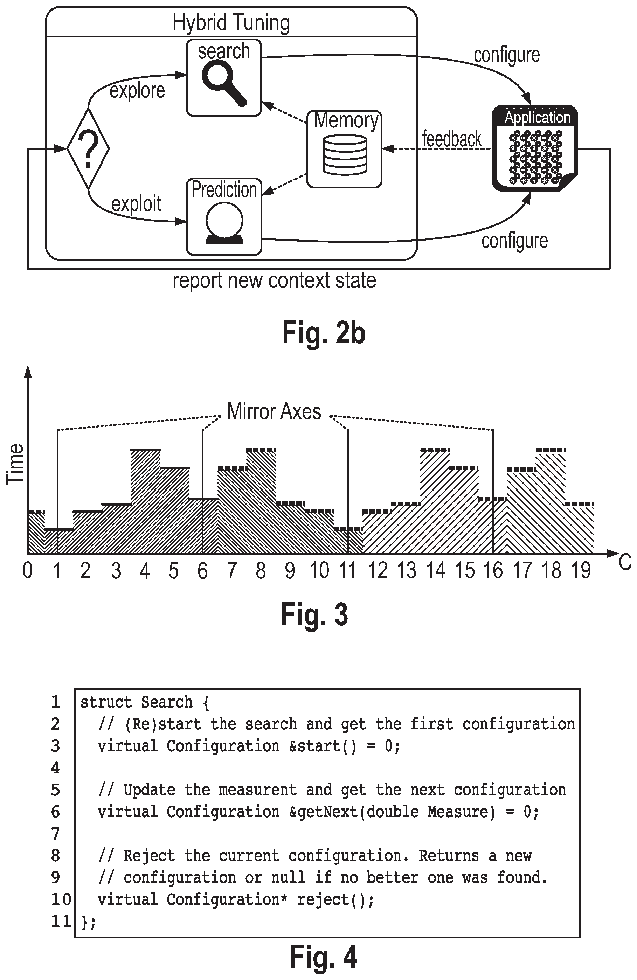

The autotuning system 20 is shown in more detail in Fig. 2. Fig. 2 shows logical units forming the autotuning system 20. A primary component of the system 20 is a hybrid tuning unit 30. The hybrid tuning unit 30 implements the hybrid tuning approach of the invention and interoperates with an application 32 through units called ParameterSpace 34 and IndicatorSpace 36. This hybrid tuning unit 30 can be extended through application developer-provided search and predictive model selections 38 and 40. The search extension(s) provides hierarchical search functionality dependent on a respective fundamental search algorithm which it is arranged to use. The model extension(s) provides prediction models to enable a prediction component of the hybrid tuning unit.

An application interacts with autotuning system (also referred to as the "autotuner" or simply "tuner") iteratively. For a previously registered set of application parameters, the application requests a new configuration for these parameters, and reports a performance metric for this configuration back to the tuner.

Integrating an application with the autotuner thus requires two steps: exposing and registering tunable parameters, and introducing update and feedback calls. A tunable application parameter can be of any type and have arbitrary semantics, as long as it is freely configurable by the autotuner. Updating the application parameters with the next configuration and reporting performance feedback about the configuration back to the tuner encompasses the tuning kernel of the application.

The update-sample-feedback sequence thus is the body of the tuning loop. Most of the time, the feedback is a runtime measure, although this is not required. The autotuner attempts to find the parameter configuration that minimizes the metric, independent of the metric's meaning.

Fig. 2a depicts an OpenMP example using autotuning to optimize the number of threads. The NumThreads parameter is registered by reference with the tuner, using a range of valid values between 1 and 16. When calling OMPTuner.start() in line nine in every call to add(...), this automatically updates NumThreads with a new sample value from this range. Reading from the variable thus uses the new configuration. Subsequently calling OMPTuner.stop() then takes care of reporting runtime feedback to the tuner, using the wall clock time passed since the last call to start(). The start()/stop() API is provided for convenience.

There are alternative APIs for using arbitrary feedback values. Note that this example is not simplified and shows the actual sequence of calls required to set up and perform autotuning, although excluding the tuning loop. The autotuner is both generic and extensible. The behaviour of the tuning process is entirely customizable: the search algorithms and online learning mechanisms can be altered or replaced by application-supplied plugins. To be fully generic, the tuner imposes no restrictions on the application parameters' types, ranges, or semantics. At its core, the autotuner provides an abstraction between the application and the search engine.

The search engine is a driver for arbitrary search algorithms such as the Nelder-Mead algorithm, ε-Greedy search, or genetic algorithms. Application developers pick an algorithm from a small selection of built-in searches or implement their own. Searches are isolated from the application through an adaptation layer, which maps between unconstrained real-valued search spaces and the often constrained and arbitrary-valued application parameter spaces. The library provides sensible defaults for this mapping for the most common parameter types: Bounded or unbounded integer or floating point values, as well as non-numeric values describing a set of choices. The mapping can be modified by the application developer.

The features outlined so far make the autotuner applicable to most tuning scenarios. Besides its usability, the autotuner's key features are mechanisms to improve amortization. The autotuner reduces both the total number of configurations tried and the number of extraordinarily bad configurations tried. It achieves this through three techniques.

The first technique is called hybrid tuning. The performance of the tuning kernel generally not only depends on the tuning parameter configuration, but also on the system and application state. To exploit that fact, the autotuner implements a hybrid autotuning method, combining search, memorization, and model-based prediction. An application may register arbitrary "indicators" with the tuner which characterize the dynamic state of the application and the system. An example is an abstract "input size". Using online learning, the autotuner automatically detects significant changes in the dynamic state and reacts to the change: Based on a predictor built through online learning, hybrid tuning can immediately switch to a learned configuration. If the exact same dynamic state was observed in the past, the memorized search result for that state is used. Otherwise, a trained model is queried for a predictably good configuration. The application is not required to provide training samples. The predictor is automatically trained for all observed indicator states from training samples produced during search.

The second technique is introducing parameter constraints to limit the scope of the autotuning. Special application parameters often induce constraints on large portions of the parameter space. One example is a parameter controlling the choice of an algorithm. Any tuning parameters contained within one of these algorithms should only be updated if this specific algorithm has been selected. The algorithmic choice parameter thus controls the relevance of the algorithm's parameters. On the other hand, the parameters controlled by the choice parameter are not independent from those that are not, in general. They cannot be tuned separately. If such relevance constraints are marked by the application developer, the autotuner constructs hierarchical search spaces to decrease dimensionality as much as possible while preserving dependencies. This additionally allows using different search algorithms for different parts of the search space. For example, introducing a "Parallel" parameter allows to also execute the computation sequentially, in which case a NumThreads parameter becomes irrelevant. Registering this dependency with the tuner allows it to exploit that fact, tuning the number of threads only if Parallel is set to "true".

A third technique is providing analytical feedback. In many practical applications, the application developer has domain knowledge of parameter configurations and can predict whether or not a configuration is reasonable. In the example of the compiler, several such predictions are possible. For instance, assigning two iterations of a parallel loop to a GPU is essentially guaranteed to result in non-optimal performance. To account for this, applications may reject configurations without measuring them. This way, the autotuner can decrease the number of sampled bad configurations to improve amortization time.

Fig. 2b illustrates an iterative tuning routine performed by the hybrid tuning unit 30.

Suitable search extensions include, for example, ones based on a Nelder-Mead search algorithm and a search algorithm termed "ε-Greedy". The prediction model extension may be based on a nearest neighbour prediction.

Each application 32 is characterized by one or more parameters. These parameters are in turn classified into different classes, for example, "nominal", "ordinal", "interval" and "ratio", as shown in table 1.

**Table 1**

| Class | Distinguishing Property | Example |
|---|---|---|
| Nominal | Labels | Choice of algorithm |
| Ordinal | Order | Choice of buffer sizes from a set small, medium, large |
| Interval | Distance | Percentage of a maximum buffer size |
| Ratio | Natural Zero Equality of Ratios | Number of threads |

As a simplification, the parameters can further be divided into "nominal" and "non-nominal" classes.

The autotuning optimizes the parameters according to some determined criterion. The nature of these parameters is entirely specific to the particular application. So-called black-box autotuners are oblivious to the parameters' semantics. More importantly, the parameters have different domains in practice. For example, some parameters may be integer, other parameters may be floating point or might not even be numbers at all. Some parameter might assume legal values from an interval of [0; 10], others from an interval of [0:0; 1:0]. Having to handle different domains is particularly cumbersome for search and model implementations.

Hence, in the invention, the implementations are isolated from these application-specific parameter properties. The isolation is provided by the ParameterSpace unit 34 which is an adapter between the application and its parameters on the one side and the search and prediction algorithms on the other. The translation allows search and prediction algorithms to operate on an n-dimensional real-valued unbounded space called the search domain, where n is the number of parameters. When the application reports feedback for a parameter configuration to the adaptation layer, hybrid tuning's state is updated and it is queried for the next configuration sample.

This sample is a real-valued vector in the search domain. The configuration is cached within the ParameterSpace unit. Once the application requests the next parameter update from the hybrid tuner component, the cached configuration sample is translated into the application domain and then passed to the application. This mechanism has two positive effects. Firstly, it allows the development of search algorithms independent of the application which uses them. Secondly, it prevents several numerical problems in the search algorithms. Search algorithms can get stuck in non-optimal configurations when trying to optimize in integer spaces. The searches never converge but flip-flop between a small set of configurations due to rounding. Through the ParameterSpace unit 34, the responsibility for, e.g., rounding and boundary treatment is moved away from the search implementation and into the application domain.

When registering parameters with the invention, applications may define the individual domain and boundary mapping behaviour as required. Additionally, the invention provides a number of sensible default adapters for the parameter types used most often. These are integer and float parameters, either unconstrained or from an interval, and bag-of-labels nominal parameters. The latter are parameters which may take any value from a set of unordered labels. Through the default adapter, these are embedded as interval-constrained integer parameters, effectively numbering the unordered labels. Integer parameters are by default converted from the real-valued search domain by rounding. To restrict legal configurations to intervals, the adapter virtually mirrors the measurement function at interval boundaries. Configuration values returned by the search are then mapped into the interval with respect to the mirroring. Fig. 3 shows an example of the procedure for a parameter that accepts integer values from the range [1, 6]. The figure displays the search space for the single parameter as it appears to the search algorithms.

Even though the parameter can only accept values between one and six, the search is free to sample any value. For instance, sampling a configuration value of C = 1.3 would through rounding set the application parameter to a value of one. Sampling a value of C = 10.7 would first apply mirroring and then rounding, setting the application parameter to a value of three. Negative values are treated accordingly, but are for simplicity not shown in the example.

This mirroring strategy has a number of interesting properties. Most importantly, it retains all local and global optima: No newly introduced point can exceed the global optimum and all previously local optima remain local. Any local extreme on the boundary of the interval is still local, but its neighbourhood is now symmetric. We cannot expect the mirroring strategy to be valid for every possible search algorithm. For instance, it is possible to misinform searches that make assumption based on distance of points in the search space. To the search, points may appear to be far apart, even though their measurements were obtained from points mapped to close proximity in the application domain. In this case, application developers are expected to supply a suitable adaptation mechanism with their parameter definition.

The IndicatorSpace unit 36 is a register for storing system indicators.

Compared to tuning parameters, managing application and system indicators is much less complex. The IndicatorSpace unit 36 is a registry containing a set of indicators. Besides registration, the component also implements change detection. What constitutes a change can be overridden by an application defining its own indicators. By default, a change happens whenever the numerical value of an indicator changes. Because applications are forced to express their indicators as numerical values, that is sufficient to realize hybrid tuning. No domain translations as in the ParameterSpace unit are necessary.

In the invention, application and system indicators are provided by the application developer. When used within the present framework, the framework's compiler assumes the role of the application developer and defines the indicators automatically.

Developer-provided indicators may be as simple as arbitrary application-side variables. Using program or function inputs as indicators is thus trivial, but arbitrarily complex indicators are possible. For example, an indicator monitoring system load could be defined, which would require querying operating system statistics every time its indicator state is queried. Additionally, depending on the nature of an indicator, observing its values may require down-sampling.

For this purpose, the application developer can add a target resolution. This is potentially useful for instance for an indicator monitoring system load. Whether the load is 99% or 100% most likely has no discernibly different effect on tuning kernel performance, but the difference between 10% and 100% is probably noticeable. It is up to the application developer to define a meaningful sampling resolution, since the invention is not intended to assume any semantics of a particular indicator.

Two search algorithms will now be described for use with the hybrid tuning unit 30.

Because of the isolation and abstraction provided by the ParameterSpace unit 34, implementations of search algorithms are required to supply only a minimal interface. Fig. 4 shows a base class. In particular, the search algorithm is not concerned with actually sampling. Instead, it returns to the calling ParameterSpace unit a sequence of configurations. It is the caller's responsibility to obtain the measurements and pass them back to the search. In the following, we use the phrase "sampling" to mean a single round-trip of returning a configuration to the caller and receiving a measurement in the next iteration. The mandatory operations a search algorithm implementation must provide are start and getNext, which (re-)starts the search and obtains the next configuration, respectively. When obtaining the next configuration, callers also provide the measurement for the last configuration as an argument. The search implementation is expected to update its internal state upon a call to getNext and to return the next configuration it wants to sample. Additionally, an implementation may support rejecting individual configurations without measuring them. Callers use this mechanism to filter out illegal configurations or to ignore configurations they do not wish to sample. That can be the case if they use performance models and predict that a configuration will be sub-optimal.

When tuning an application, developers can provide their own implementation of a search algorithm or pick a default from a small catalogue of implementations. The library distinguishes between algorithms for nominal and non-nominal parameters. Unless the application developer requests otherwise, the novel hierarchical search algorithm for search in mixed spaces is used, In this section, we describe the two default fundamental search techniques used by hierarchical search. The hierarchical search technique itself will be discussed below.

The tuning library includes as fundamental search algorithms an implementation of the Nelder-Mead downhill simplex algorithm, an ε-Greedy algorithm, and random and full exploration. While the latter two are self-explanatory, the variants of Nelder-Mead and ε-Greedy will be discussed in the following.

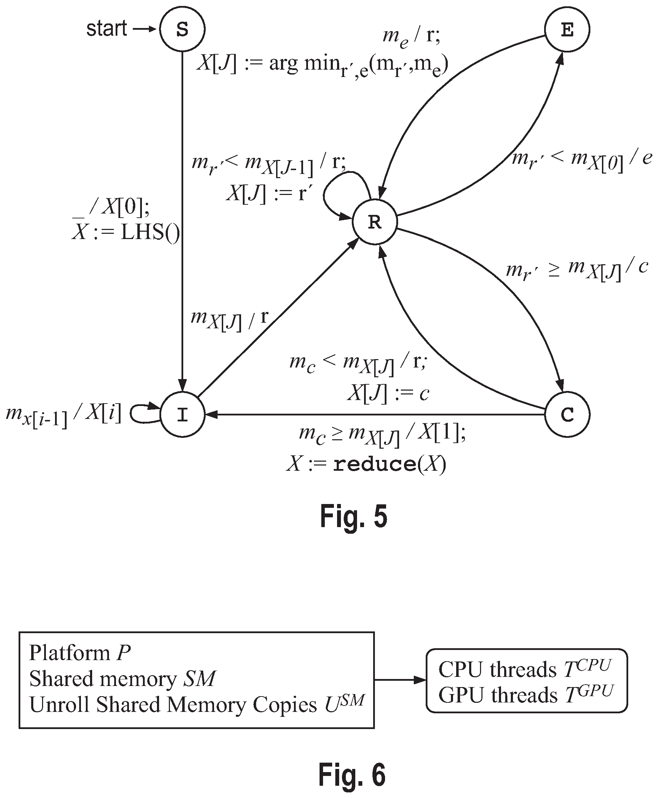

In this embodiment of the invention, the fundamental search strategy for non-nominal parameters is an implementation of the Nelder-Mead Algorithm described in J. A. Nelder and R. Mead. "A Simplex Method for Function Minimization" in: The Computer Journal 7.4 (Jan. 1965) (cit. on pp. 15, 91). The algorithm is a heuristical derivative-free numerical optimization technique. The algorithm is implemented as a small Mealy automaton, a finite-state machine shown in Fig. 5. The implementation maintains a simplex as an array of search space points χ along with their measurement values *mx, x* ∈ *χ.* The points in *χ* are sorted in ascending order with respect to *mx.* The state machine changes its state in every tuning iteration.

A state transition is defined as a triple *M*/*C; U,* where *C* is the next configuration and *M* is the measurement feedback *mC*' for the previous configuration *C*', optionally including a constraint on the measurement value. Lastly, *U* defines an optional update to the simplex *χ*, which is applied before the next configuration is returned. The state machine is defined by five states with the starting state *S.* The transitions implement the Nelder-Mead update rules.

From the starting state, the automaton transitions into the initialization state *I* by initializing the *J* + 1-dimensional simplex from a Latin Hypercube sample. The first simplex point is returned as next configuration to the application. Latin Hypercubes are a technique to obtain space-spanning configurations and are often applied to seed search algorithms. To obtain a simplex based on this technique, every dimension of a bounded *J*-dimensional space is split into *J* + 1 equally sized intervals. Then, we draw samples randomly such that no two samples fall into the same interval in any given dimension. Once the application returns the measurement feedback for the last simplex point, the automaton performs the reflect operation by transitioning into the reflection state *R* and returning the reflected point *r.* The transition into the reflection state's successor depends on the measurement feedback *m*'ᵣ for the last reflected point *r'.* If *m'ᵣ* is less than mχ[0], the measurement value of the best simplex point, the automaton performs an expand operation, returning the expanded point *e* and transitioning into the expansion state *E*. If *m'r* lies between the best and worst simplex point, substitute the worst simplex point χ[*J*] for the previous reflected point *r*' and perform another reflection, producing the next reflected point *r.* Otherwise, if *m'r* is greater than or equal to the measurement value of the worst point, perform a contract operation and return the contracted point *c.* The expansion state *E* transitions back into the reflection state *R after* receiving the feedback *me* for the expanded point *e.* The transition substitutes the worst simplex point for the better one among *e* and *r'* and executes another reflect operation producing the next *r.* Similarly, the automaton performs a reflect operation in the contraction state *C* if the feedback *mc* for the contracted point c is better than the value of *χ*[*J*]. In that case, *χ*[*J*] is substituted for c. Otherwise, if *mc* is greater than or equal to *mχ*[*J*], a reduce operation is performed. This operation forms a new simplex by moving every point towards χ[0]. Subsequently, every simplex point except χ[0] needs to be sampled, so starting with χ[1] the automaton enters the initialization state *I*. The reflected, contracted, and expanded points *r*, *c*, and *e* are computed using default parameter values suggested in the original Nelder-Mead article: α= 1; β = 0:5; γ = 2. Our implementation of the Nelder-Mead algorithm does not support rejecting individual configurations.

The second search algorithm is the so-called ε-Greedy algorithm.

For nominal parameters, in this embodiment of the invention the ε-Greedy algorithm is implemented, which achieved the best performance in an exploratory case study. The algorithm keeps track of the best known configuration. At every step, it either samples a random configuration with probability ε or uses the best known configuration with probability 1 - ε. Another hyper-parameter, controlling the decay of ε over time is added. This parameter is called γ_{ε} ∈ (0, 1). The probability to pick a random configuration at step i then becomes εᵢ = ε. (1-γ_{ε})ⁱ. Thus, γ_{ε} offers direct control over the convergence rate. Setting this hyper-parameter to zero returns to the original ε-Greedy behaviour. When the application rejects a configuration, the algorithm returns a new random sample.

In real-world programs, parameters are not only frequently integer, but also often nominal. Applying a search algorithm to optimize a mixture of the two classes is highly problematic, because it limits the choices for apt search algorithms. Although the invention does not proactively prevent application developers from picking an unsuitable search algorithm for the parameter mix, it is strongly discouraged. Search algorithms drawing conclusions based on, e.g., neighbourhood of configurations will derive information that is purely coincidental. Consider as an illustration tuning the algorithmic choice of a matrix multiplication algorithm.

When the nominal tuning parameter *A* = {i*jk; ikj; strassen*} is embedded into integer space by simply enumerating the algorithms, the hill climbing algorithm can be applied.

If the hill climber now observes *m(ijk)* = 2 and *m(ikj)* = 1 it will conclude that space looks promising in the direction of *ikj*. Independent of whether *strassen* is actually better than *ikj* this conclusion is already a coincidence. The order of the algorithms is irrelevant. As we found in an exploratory case study, the vast majority of the empirical search algorithms used today are faced with this problem: They operate on a notion of direction or distance. A prominent exception are genetic algorithms, which, when using appropriate crossover and mutation operators, works well on combinatorial optimization problems.

In the invention, we approach search in such mixture spaces in a structured way that is automatic and transparent to the application developer. As an example, consider a simplified version of the heterogeneous parallelization approach. We generate parametric parallel code for the CPU and the GPU and add a tuning parameter to select the platform. In this example, we tune five application parameters in total: *P*, the binary platform choice; *T^{CPU},* the number of CPU threads; *T^{GPU},* the number of GPU threads; *SM*, the flag to enable shared memory; and *U^{SM}* the flag to unroll the memory copy loops moving data into shared memory. Table 2 summarizes these parameters together with their ranges. Traditional, state-of-the-art tuning solutions embed these parameters into a single five-dimensional space containing 2 . 48 . 32 . 2 . 2 = 12,228 valid points. The first improvement we make is to separate this single space into two smaller spaces by distinguishing between nominal and non-nominal parameters. Fig. 6 shows the effect graphically: The space on the left now contains only nominal parameters, the one on the right only non-nominal parameters. Note that this separation does not actually reduce dimensionality. There are 2 . 2 . 2 = 8 points in the nominal space and 32 . 48 = 1536 points in the non-nominal space. Finding configurations in the individual spaces independently is however not legal, since the parameters are not independent: Assume for example that on the GPU the kernel runtime is defined by *m_{GPU}* = 0:5 . *T^{GPU}* if shared memory is disabled (C_{SM} == false), and ${m}_{GPU} = \frac{1}{{T}^{GPU}}$ otherwise. Which value of *T^{GPU}* is optimal obviously depends on the selected value of *SM*. Ignoring the selected value of the nominal parameter *SM* when selecting a value of the non-nominal parameter *T^{GPU}* is hence not a viable path.

Instead, configurations must be sampled from the cross product of both spaces, which means that the cardinality of the separated space remains unchanged. Nevertheless, with this first decomposition, we are now able to explore the spaces with different search algorithms that are appropriate for the respective parameter class, e.g., the ε-Greedy algorithm on the one hand and the Nelder-Mead algorithm on the other. To retain the dependence between parameters we configure parameters hierarchically:
We first determine a configuration for the nominal parameters using the ε-Greedy algorithm and then a configuration for the non-nominal parameters using the Nelder-Mead algorithm. Because we cannot select configurations independently, we maintain one instance of the Nelder-Mead search per nominal configuration. In this example, the memory consumption of our Nelder-Mead implementation is thus increased by a factor of eight. A Nelder-Mead instance consumes *O*(*n*²) space where *n* is the dimension of the search space.

The actual increase in memory footprint is however only about 30%, or by a factor of $\frac{{8.2}^{2}}{{5}^{2}}$ to be precise: While the space consumption of Nelder-Mead is increased eight-fold, the number of parameters goes down from five to two. Although a 30% space increase appears to be small, the penalty can actually have a drastic impact, since it is exponential in the dimensions of the nominal search space. On the other hand, having paid this price we have achieved much simpler search spaces for the individual search algorithms and have enabled targeting the individual parameter classes with appropriate algorithms. Additionally, the instantiation of search instances occurs lazily. We thus incur the worst case memory consumption overhead only if we sample every nominal configuration, which in practice happens only for small nominal spaces.

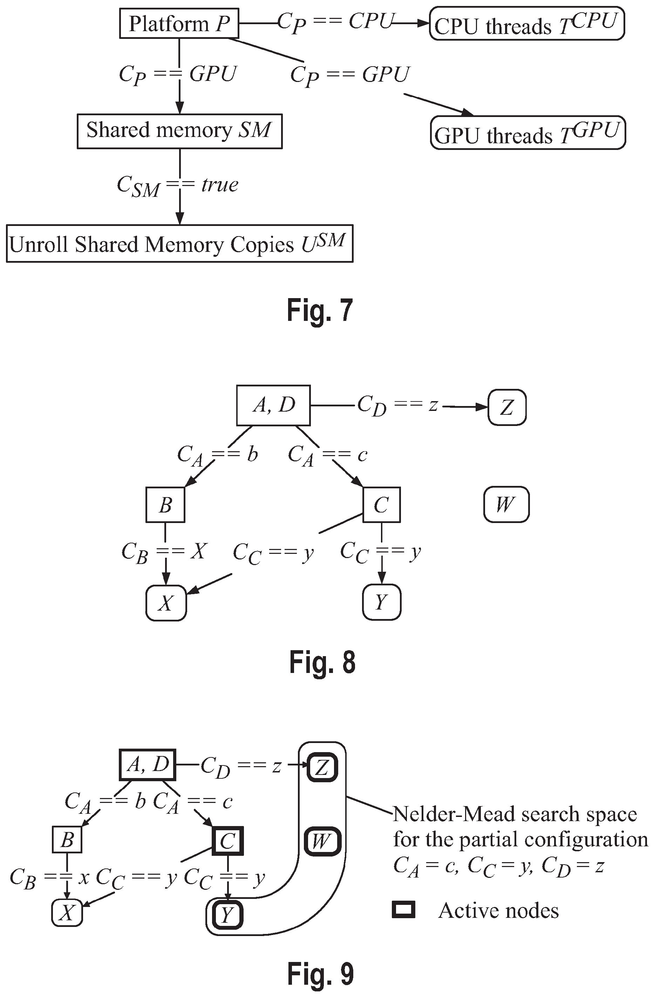

Decomposing the search space into nominal and non-nominal subspaces opens the door for another optimization. In practice, nominal parameters often refer to algorithmic choices and as a consequence lead to different control flow paths in the application. In the example, the parameter *P* controls whether the CPU or the GPU implementation of the parallel code is to be executed. So transitively, this parameter also controls the relevance of the parameters *T^{CPU}* and *T^{GPU}*: When running the CPU version of the code, e.g., configuring the GPU thread count has no effect. Using the application developer's context knowledge of the application parameters' semantics, we can leverage such constraints. In the example above we can identify two more constraints: The number of GPU threads is tied to the selection of the GPU and unrolling the loop moving data into shared memory is only relevant when shared memory is enabled. Honouring these constraints produces the search space decomposition pictured in Fig. 7. Unlike the first-level decomposition, this second step does reduce the cardinality of the space. We see that for this example we have achieved the highest degree of dimensionality reduction possible, having only one-dimensional search spaces. That also reduces the size of the sample space, because the constraints exclude irrelevant configurations. The total number of sampleable points is now 48+32+2 . 32 = 148: There are 48 configurations where *C_{P}* == *CPU*, 32 configurations where CP == GPU, CSM == false, and 2 . 32 configurations where CP == GPU;CSM == true.

The caveat of this second-level decomposition is the same as above: We need to retain parameter dependences. That means that for both the nominal and the non-nominal spaces we need to maintain separate search state for every configuration in which the space is relevant.

In summary, even for this small example we managed to reduce the size of the search space by two orders of magnitude, while at the same time allowing the tuner to explore parts of the search space using different, appropriate search mechanisms. The size reduction is due to a decomposition of the search space by characterizing parameters into their respective classes and based on relevance constraints. In the following, we formalize the algorithm that implements the decomposition and search in the decomposed space. The general idea is to compute a decomposition into the minimal number of subspaces such that the relevance and class constraints are preserved. The first level of the decomposition is straight forward: We partition the search space *T = T^{N}* u *T^{R}* into the naturally disjoint subspaces *T^{N}* of the nominal parameters and *T^{R}* of the non-nominal parameters.
**Relevance Constraints**. The second level of the decomposition is computed based on the *relevance constraints* defined by the application developer. We write ${τ}_{i} {\to }^{υ} {τ}_{j}$ where *τᵢ* ∈ *T^{N},τⱼ* ∈ *T* and *υ* E *τᵢ* to say that the relevance of the tuning parameter *τⱼ* depends on the configuration value *C_{τᵢ} = υ* of the nominal tuning parameter *τᵢ*. When a parameter is relevant, the search must provide a configuration value for it. Otherwise the parameter should not be configured. Note that only nominal parameters may appear on the left hand side of the constraint. Naturally, neither circular nor contradicting constraints are allowed.
**Local Search Spaces**. We call subspaces of both *T^{N}* and *T^{R} local search spaces* when all elements of a subspace are subject to the same relevance constraints. To be precise, a subspace 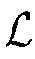 ⊆ *T* is a local search space if and only if either 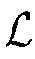 *C T^{N}* or 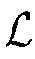 *C T^{R}* and $∀ \left({τ}_{i}{\to }^{υ}{τ}_{j}\right)$*,* $\left({τ}_{i}{\to }^{v ′}{τ}_{j}^{′}\right)$, *τᵢ* ∈ *T^{N}, τⱼ,* ${τ}_{j}^{′} ∈ L : υ = υ ′$*.*
**Search Space Graph**. Together, the local search spaces and the relevance constraints form a directed acyclic graph, which we call the *search space graph* 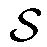 *=* ( 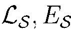 ). The nodes 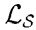 of the graph are the local search spaces induced by the relevance constraints, which form the edges 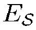 of the graph: ${E}_{S} = \left\{\left({L}_{i}, {L}_{j}\right)\left|∃{τ}_{i}{\to }^{υ}{τ}_{j}, {τ}_{i}∈{L}_{i}, {τ}_{j}∈{L}_{j}, υ∈{τ}_{i}\right.\right\} .$

The roots of the graph are formed by precisely the local search spaces containing all of the unconstrained parameters.
Before we proceed with the introduction of the hierarchical search procedure, let us first discuss another more complete example of the search space graph decomposition. Consider the parameter set *T* = {*A, B, C, D, X, Y, Z, W*}, for which *A* through *D* are nominal, *X* through *Z* are non-nominal. The first-level decomposition is then *T^{N}* = {*A, B, C, D*}, *T^{R} =* {*W, X, Y, Z*}. Further, let the dependence constraints be $A {\to }^{b} B , A {\to }^{c} C , B {\to }^{x} X , C {\to }^{y} Y , C {\to }^{y} X$*,* and $D {\to }^{z} Z$*.* A valid search space graph is shown in Fig. 8. There are two subspaces without incoming constraint edges: The one containing the nominal parameters A and D and the one containing the non-nominal parameter W. The two spaces are disjoint because they contain parameters of different classes. Although X and Y both depend on the same configuration value for C, they are in distinct local spaces because X has another dependency, on B, which Y does not share. To find a configuration in the search space graph decomposition, hierarchical search traverses the graph along edges whose constraints are fulfilled. The process is described in the following.

**Local, partial, and maximal partial configurations.** Configuring the tuning parameters on the basis of the graph means determining local configurations for all nodes whose constraints are fulfilled. A local configuration for a local search space I is a configuration *C^{I}* for the parameters in that local search space. We call a set of local configurations for distinct local spaces a partial configuration *C^{S}* for the search space graph *S* when it contains no contradicting local configurations. Local configurations *C^{I}, C^{I'}* contradict if there are two paths including *I* and to *I*' containing contradicting constraints. A partial configuration is called a maximal partial configuration if there is no possible local configuration that can be added to the partial configuration without contradicting a local configuration in the set.

As an illustration of contradicting configurations consider the local spaces containing B and C in the example above. The two spaces cannot be part of a partial configuration, because that would require A to be configured with the values b and c simultaneously.
**Active nodes.** Given a partial configuration *C^{S},* we say a node *l* ∈ 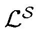 is *active* for *C^{S},* if for all edges ${τ}_{i} {\to }^{υ} {τ}_{j}$ on all paths *p* from *l^{R}* to *l, C_{τᵢ} = υ.* In particular, any nodes without incoming edges are always active. There can be two such nodes of the graph, one containing all unconstrained nominal parameters and one containing all unconstrained non-nominal parameters. Producing a maximal partial configuration means producing local configurations for all active nodes recursively. Hierarchical search produces maximal partial configurations by successively searching active nodes until no additional nodes become active. After obtaining a local configuration for the current node, the search recurses into active neighbours of the current node in a deterministic order. Accumulating the local results into the partial configuration until no active neighbours remain produces a maximal partial configuration. For nominal spaces, hierarchical search exploits that finding nominal parameter configurations is a combinatorial optimization problem. We exploit that fact to enable using an individual search instance on a single active nominal node in isolation. Because parameters are interdependent, the search instance must consider the current partial configuration. For that reason, hierarchical search maintains concurrent search state for all partial configurations it produces. For non-nominal spaces on the other hand, this kind of isolation of the active spaces is not practical. Instead, all active non-nominal spaces are joined into a single space which is than explored using a Nelder-Mead instance. To account for the dependencies between nominal and non-nominal configurations, that instance is again maintained per partial nominal configuration. Because the non-nominal spaces are the leaves of the search space graph, they are activated last and as a single unit.

Consider Fig. 8 for a step-by-step example of the activation process. Initially, all search state is empty. For the {A, *D*} node, let the ε-Greedy search select the configuration {b, z}, which according to the constraints activates the nodes {B} and {Z}. Nominal nodes are processed first, hence let the ε-Greedy instance for the current partial configuration {b, z} pick the configuration {x'} for the node {B}. That yields the partial configuration {b, z, x'}, which we use to finally activate the Nelder-Mead instance for the node {Z} to produce a maximal partial configuration. Let the application return a measurement value of 0.7 for this configuration, then the search state after this first tuning iteration is:

| Space | Instance | Local Config. | *m_{C}* |
|---|---|---|---|
| {*A, D*} | Ø | {*b*, *z*} | 0.7 |
| {*B*} | {*b*, *z*} | {*x*'} | 0.7 |
| {*Z*} | {*b, z, x*'} | {...} | 0.7 |

In the next tuning iteration, let the search instance for the {A, D} node return the configuration {c; z'}. This partial configuration activates only the node {C}. Assume this node's search instance for this configuration returns {y'} and the application measures a value of 0.9 for the resulting maximal partial configuration. Highlighting the updated values, the search state after the second tuning iteration becomes:

| Space | Instance | Local Config. | *m_{C}* |
|---|---|---|---|
| {*A, D*} | Ø | {*b*, *z*} | 0.7 |
| | | {c, *z*'} | 0.9 |
| {*B*} | {*b*, *z*} | {*x*'} | 0.7 |
| {*Z*} | {*b, z, x*'} | {...} | 0.7 |
| {*C*} | {*c*, *z*'} | {*y*'} | 0.9 |

For the third tuning iteration, assume the {A, D} instance returns {c, z}, activating {C}. Let the ε-Greedy instance for {c, z} return {y}. Then, Fig. 9 shows the current activation state for this partial configuration. By applying two steps of the ε-Greedy algorithm, hierarchical search has produced the partial configuration CA = c, C_{C} = y, C_{D} = z and has thus activated the local spaces {A, D}, {C}, {W}, {Y}, and {Z}, all highlighted in the figure. Although {W} was active concurrently to {A, D} because it has no constraints, it is a non-nominal subspace and is thus only activated once the partial configuration is maximal with respect to the nominal parameters. For the given partial configuration the non-nominal spaces {W}, {Y}, and {Z}, highlighted, are activated together for a single Nelder-Mead instance. Assuming the application reports a measurement of 0.6 for the resulting maximal partial configuration, the search state after the third iteration becomes:

| Space | Instance | Local Config. | *m_{C}* |
|---|---|---|---|
| {*A*, *D*} | Ø | {*b, z*} | 0.7 |
| | | {*c*, *z*'} | 0.9 |
| | | {*c*, *z*} | 0.6 |
| {*B*} | {*b, z*} | {*x*'} | 0.7 |
| {*Z*} | {*b, z, x'*} | {...} | 0.7 |
| {*C*} | {*c*, *z'*} | {*y*'} | 0.9 |
| | {*c*, *z*} | {*y*} | 0.6 |
| {*Y*, *Z*, *W*} | {*c*, *z*, *y*} | {...} | 0.6 |

Note that at this point, there are two concurrent search instances for the {C}. Decomposing the search space in this manner does not only help to reduce the size of the space effectively, it also allows rejecting configurations more efficiently. Applications reject configurations when they determine heuristically that a configuration would produce poor performance. Often, however, a combination of only a small number of parameters contributes to this fact. Consider the heterogeneous offloading example (Fig. 7): If the parallelized code is trivial or executes only for a small number of iterations, the application may rightfully judge that offloading this computation to the GPU is highly likely to actually decrease performance because of the overhead. The only parameter relevant to this is *P*, the one controlling the platform selection. Neither of the remaining ones contributes to the offloading decision. With the search space graph, we allow applications to also reject partial configurations. For example, the application is able to reject as soon as a partial configuration setting C_{P} = GPU is constructed. As a consequence, we enable making rejection decisions early in the configuration process. Rejecting configurations early further reduces the number of nodes that are ever activated.

Two types of model for the prediction component of hybrid tuning have been explored. The first one is a tabular nearest-neighbor approach. The second one is using generalized reinforcement learning, using function approximation to model the relationship between indicators, configurations, and runtime. The tabular predictor is simple: Every observed state is recorded in a table, alongside the best known configuration for that state. When the tuner enters a new indicator state, the table is queried for the geometrically closest known state. Although nearest neighbour searches can be implemented efficiently, there are two major drawbacks to this approach. The motivation for nearest-neighbour prediction is of course that the same configuration is likely good for similar states. When a new state is however a large distance from all states in the table, the query result can be arbitrarily bad. This problem can be mitigated by not using the query result if the distance is too large, but that requires defining a distance threshold. The second drawback is the table size: Storing information for every possible state is infeasible, especially when states are not discrete. Of course, the table could only be populated through exploration or its size could be limited. That however would either disable the possibility to learn during exploitation or it would add another hyper-parameter to limit the size. In this invention, we offer size limitation as well as control over the indicator resolution to the application developer.

A way around the drawbacks of tabular prediction is provided by generalized reinforcement learning. Whereas classical reinforcement learning (RL) techniques are table-based themselves, generalized approaches approximate the tables through functions. By approximating the relationship between indicators, configurations, and runtime as a function, RL eliminates the need to either store every state or the need to choose which states to store. To predict a good configuration for a state, the function is used to find the configuration that maximizes an estimate of the reward for the state-configuration pair. Unfortunately, function maximization is expensive, which could bar hybrid tuning from being applicable to online tuning scenarios. Instead, we therefore keep a record of the best configurations found during exploration and consider only those as candidates for the prediction. Although this is still potentially large if hybrid tuning explores often enough, it is generally much smaller than a complete state table.

In the present invention, we implement a version of the Greedy-GQ variant of Q-Learning as our function approximation predictor. We approximate the table as a function Qθ(s, a) = θ . φ(s, a), where the φ are features of the indicators defined by the application developer. As a default, the invention uses normalized radial basis functions as features: It defines ${φ}_{c} \left(x\right) = \frac{exp \left(-{ω}_{c}{\left(x-{μ}_{c}\right)}^{2}\right)}{{\sum }_{i} exp \left(-{ω}_{i}{\left({μ}_{i}\right)}^{2}\right)}$ where x = (s, a) is the concatenation of the indicator state vector s and the configuration (or action) a. Compared to regular radial basis functions, which are just RBF_{c}(x) = exp(-ω_{c}(x - µ_{c})²), the normalized variant promises smoother space boundaries as well as smoothed out "gaps" between the basis functions. The centre µc and width ωc are configurable parameters. The standard update equations of the Greedy-GQ algorithm are controlled by three hyper-parameters, α, β, and γ. Both α and β are learning rates. The third parameter, γ determines the influence of expected future rewards on the update. For our application, however, we assume that influence to always be zero: Accounting for future rewards allows propagating information about future states into the update. However, we assume that there is no correlation between the action we choose now and any subsequent state change. That assumption is of course only valid for applications in which the context state does not depend on tuning parameters. Setting γ to zero eliminates β, and simplifies the update equation to ${θ}_{t + 1} = {θ}_{t} + α \left({R}_{t + 1}-{θ}_{t}⋅φ\left({s}_{t}, {a}_{t}\right)\right) φ \left({s}_{t}, {a}_{t}\right) .$

The autotuning system implements the hybrid online autotuning approach as a black-box tuner. Hybrid tuning combines online search and model-based prediction to provide the following three main features:
**Context sensitivity:** The runtime of the tuning kernel not only depends on configurations of tuning parameters, but also on the dynamic tuning context. In the invention, a tabular memory records configurations and tuning context states. When a previously seen state recurs, the previous configuration for that state is used. In addition to the tabular memory, a prediction model is constructed to predict good configurations for unknown context states.
**Effective exploration:** To explore the search space and bootstrap the table and prediction model, the tuner uses online search. The set of implemented default search algorithms can be extended by application developers.
**Efficient exploration:** While known online search techniques find a (locally) optimal configuration relatively fast, there is room for improvement. The search algorithm called hierarchical search as described here accelerates the search time substantially by automatically exploiting structure in the search space and by avoiding known bad configurations.

Two directions exist in current autotuning designs: Optimization is generally either machine-learning or model-based, or search-based. The two alternatives offer different benefits and drawbacks. When parameter configurations are produced by a machine-learning or model-based predictor, an immediate reaction to a change in the dynamic context is possible: The predictor is queried for the updated context state and returns a single parameter configuration. With search-based tuning on the other hand, every change in the context entails overhead: To find a new configuration, the search is restarted, sampling new configurations until a new (local) optimum is found. The drawback of using prediction, however, is that the quality of the configuration depends on the accuracy of the predictor.

If the predictor was hand-crafted, its accuracy is determined by how precisely its designer modeled the application and the dynamic context. If the predictor is learned, then its accuracy depends on how well the learned model generalizes from training data and how well the data reflected reality. While machine-learning eliminates the need for a meticulous human model designer, it generally requires large amounts of training samples to be accurate. With offline training, the quality of the learned predictor is governed by how well the provided training data represents the data that will be observed in production. Online training on the other hand can learn from data actually occurring in production, but there is a bootstrapping problem: If the initial model is imprecise, initial predictions are sub-optimal and performance is decreased. With search-based tuning, there is no bootstrapping problem and the quality of the found configuration is independent from any a-priori sample data.

With hybrid tuning, we present a compromise between the two directions. Hybrid tuning combines prediction and search, using online search to explore the search space and to provide continuously training data to update the prediction model. Because training happens online, prediction is insensitive to any a-priori sample bias. The hybrid tuning workflow is shown in Fig 9: Whenever a change in the dynamic context is detected, hybrid tuning can choose between exploration of the search space using search or exploitation of the trained prediction model. Any performance feedback provided by the application in either mode is used to refine the prediction model. A configuration table additionally stores the best known configuration for observed context states.

To implement hybrid tuning, we model the changing context and the reaction to changes as a Markov Decision Process (MDP). The model represents context changes as process state transitions and uses MDP decision making to choose between exploration and exploitation. In the following section, we briefly introduce our process model. Subsequently we discuss how we implement detection of context changes and our approach to balancing exploration and exploitation.

To represent the context sensitivity problem in the autotuning system we construct an infinite horizon MDP. An MDP is the quadruple (*Σ*, *A, Φ, ρ*).

In this model Σ is the *state* space, and *A* is the space of possible *actions.* The state space represents the dynamic context in which the tuner operates. In MDP literature the tuner would be called the "agent". A change in the context thus constitutes a change in the state space, causing the agent to pick an action. We define the action space *A = T* as the set of possible configurations.

The agent picks a configuration according to a policy, usually called *π*(*s*), *s* ∈ Σ, which determines actions for every state. The *action model* ϕ : Σ × *A* × Σ → [0, 1] describes the probability ϕ(*s*, *a, s') = p*(*s'*|*s, a*) when in state s to transition to the state *s'* when performing action *a.* We cannot define a "on-size-fits-all" action model, since it is unknown whether a chosen action has any actual influence on state transitions. Consider again the library parallelization example discussed previously: Actions affect the runtime of the called library functions, but we cannot reasonably assume that they have any effect on the context states reported to the library by its client. The action model thus has to be learned by observing state transitions.

Finally, the *reward function ρ :* Σ × A × Σ → [0, 1] determines the reward *r = ρ*(*s, a, s'*) for transitioning from state *s* to *s'* under action *a.* We set *r* = *-m,* i.e., the immediate reward achieved after every action selection is just the performance measurement. The negative sign serves to turn the minimization goal of autotuning into a maximization objective for the agent.

Before the autotuner can adapt dynamically to a context change, it first has to detect it. To achieve this, we first have to model and *quantify* the context. Thus, we need to determine the momentary state of both the application and the system. For this, we introduce *context indicators* ${I}_{c} \left(t\right) ∈ ℝ$ as "probes" serving to monitor various static and dynamic properties of the context at every time point *t.* Together, the set of the *application context indicators* ${I}_{{c}_{A}}^{A} \left(t\right)$ and the set of the *system context indicators* ${I}_{{c}_{S}}^{S} \left(t\right)$ produce a model ${K}^{˜} = \left({I}_{0}^{A},…,{I}_{a}^{A},{I}_{0}^{S},…,{I}_{s}^{S}\right)$ of the real dynamic context *K* at a given point in time. In the remainder of this section we will only ever refer to the approximated context, and will thus use the terms interchangeably.

Indicators in hybrid tuning may represent both discrete and continuous quantities. While this is necessary to support general applications, it strongly affects the MDP model. Since the context forms the state space of the process model, incorporating continuous indicators turns it into a continuous Markov decision process. Such processes have significantly different solutions and convergence guarantees.

The discrete versus continuous indicator distinction also affects change detection. In a discrete context, detecting change just means watching the indicators for value changes. The same is possible for continuous indicators of course, but we define two additional schemes. Continuous quantities often exhibit high frequencies. Consider a system load indicator for instance once more: Measuring it essentially produces a different value every time, since the system the application is running on is never really at rest. Here, smoothing the response function with some low-pass filter can help, e.g., by averaging multiple indicator samples over time. While the changes of the indicator values may be high-frequency, they are often low-amplitude at the same time: When the system is busy, for example, the system load usually stays in the 100% range. Additionally it is easy to assume that small changes in the indicator values only effect negligible changes in performance, and thus in the optimality of the current configuration. For example, if the system load changes from 98% to 99%, the effect is likely not measurable. Both smoothing and down-sampling can help with this effect. Alternatively, it is possible to detect state changes purely by observing the effect of the indicators: Monitoring the measuring function, we can detect state changes when there are drastic changes in the function's value.

Having a device to quantify the context and detect changes, the next step is to react to this change. Within the framework of our model reacting to changes is implemented by the policy π. We borrow from the field of reinforcement learning to develop our policy, which is loosely based on ε-Greedy, a frequently used policy in the field: With a probability of ε, we explore the search space using hierarchical search when encountering a state change. With a probability of 1-ε, we exploit a predictor which is trained during exploration from the sampled configurations.

Because the application-tuner interaction is iterative, both options are not "atomic" in the sense that they are a singular reaction to a state change. Instead, the hybrid tuner can be either in exploration mode or exploitation mode. While in the former, it will produce configurations as directed by hierarchical search. Being in exploitation mode implies that there is only a single configuration update, namely when entering that mode. In exploration mode on the other hand, multiple configurations are sampled. Consequently, another state change might occur while the search is still ongoing. In that case, the current search state is saved and the search will be continued when the previous state recurs.

Having described the autotuning system 20, an example of an implementation of the compiler 10 will now be described. The particular form of compiler implemented is not limited with respect to the described embodiment which is described for illustrative reasons only. In principle, the task of parallelizing a program for execution on a heterogeneous system can be performed by hand and then compiled or the compiler can also perform the parallelization. The number of the tasks which are parallel tasks is in itself a tuning parameter. If the program is written in a form comprising parallel tasks, no further parallelization would be required. Automatic parallelization is preferred in the present invention as it can beneficially be used with the autotuning system with parameters such as the number of threads and whether to use shared memory being identified and made available for tuning.

In the present example the compiler parallelizes loops in the input program for multiple platforms and instruments the result to interoperate with the autotuner through a runtime library. To analyze and transform the program we implement two techniques. First, the compiler attempts to analyze the program using the polyhedral model. If this fails due to constraints the polyhedral model imposes on representable programs, we fall back to classical dependence testing and more ad hoc transformations.

In the following, we describe the polyhedral model-based parallelization, and then the ad hoc method. Then we discuss how the compiler and the autotuning system can interact to also incorporate analytical information that the compiler can derive into tuning decisions.

Generating code for cooperative heterogeneous execution from the polyhedral model is a three stage process. The process starts with computing a schedule for the SCoP that maximizes data parallelism. The next step is partitioning the outermost parallelizable loops for the platforms in question, which here are the CPU and GPU cores, and then mapping the partitions onto the platform. Finally, the optimized and mapped schedule is translated into actual parallel code for the platforms. We describe our approach to partitioning and mapping as well as code generation, and finally the interoperation with the autotuner in the following.

The strategy for heterogeneous parallelization with the polyhedral model is based on Polly-ACC, and thus makes heavy use of the PPCG GPU mapper described by Sven Verdoolaege et al. "Polyhedral Parallel Code Generation for CUDA", in: ACM Transactions on Architecture and Code Optimization (TACO) - Special Issue on High-Performance Embedded Architectures and Compilers 9.4 (Jan. 2013), 54:1-54:23. With its help, we first compute a schedule tree optimized for data parallelism from the SCoP. Before mapping the optimized schedule to the GPU using the PPCG code generator, we transform it by introducing first tunable partitioning and second tunable platform mapping.

Fundamentally, partitioning a loop requires duplicating it and then modifying the boundaries of the copies: One loop copy handles the lower part of the iterations, the other one the higher part. To make that tunable, a tuning parameter determines the iteration that separates the lower and higher part. Mapping a partition to platforms is essentially the same operation: produce one instance of the partition for every platform and add a tuning parameter to select the instance dynamically. Note that these two steps only parallelize the outermost loop. Repeating the process recursively handles all data parallel loops. In the following, we describe in more detail how we realize this process within the polyhedral framework.

We transform the schedule tree top down recursively, searching for the outermost data parallel loops in the loop nest. To insert the partitioning, we begin by finding the outermost band which has leading parallel dimensions. The set of the leading parallel dimensions corresponds to the set of outermost data parallel loops. Every loop in this set is split into two parts: One for the high indices and one for the low indices. Although the number two appears to suggest itself because two platforms are targeted, the approach supports any number of partitions.

We split the outermost parallel dimension of the band by introducing a set node between the band and its parent with two filter children which implement the constraints for the partitions. A newly introduced parameter *R0* defines the split of the outermost parallel dimension of the band. *R0* is subject to the same constraints as the iterator of that dimension. In the partition filters, this parameter becomes the new upper and lower bound of that iterator to select high and low indices, respectively. The original band node is duplicated and attached to the filters.

This process repeats recursively for the remaining leading parallel dimensions of the band. In summary, when partitioning *d* dimensions, we insert 2*^{d}*-1 set nodes in total, producing 2*^{d}* copies of the original band. To implement platform selection, we follow exactly the same path. For every band node we created, we insert a new sequence node as its immediate parent, between the band node and the set filter that we created during partitioning. We introduce new parameters *Pᵢ^{Low}* and *Pᵢ^{High}* for the platform selection for the *i-*th loop, *Pᵢ^{r}* ∈ {0,1}for both the high and low index partitions. The two filters of the new sequence node implement the constraints *Pᵢ^{r}* = 0 to select the CPU and *Pᵢ^{r}=1* to select the GPU. Again duplicating the band node, we finally parallelize it for the GPU by applying the PPCG mapping algorithm to the band where *Pᵢ^{r}*. For its sibling, however, we insert a mark node, which we use during code generation as the starting point for generating OpenMP code for CPU parallelization.

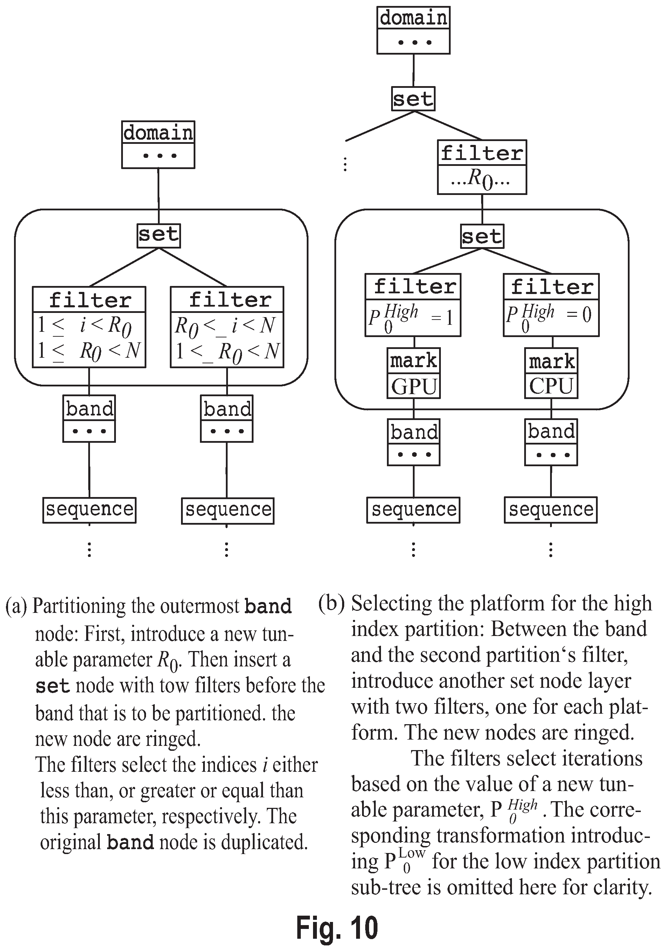

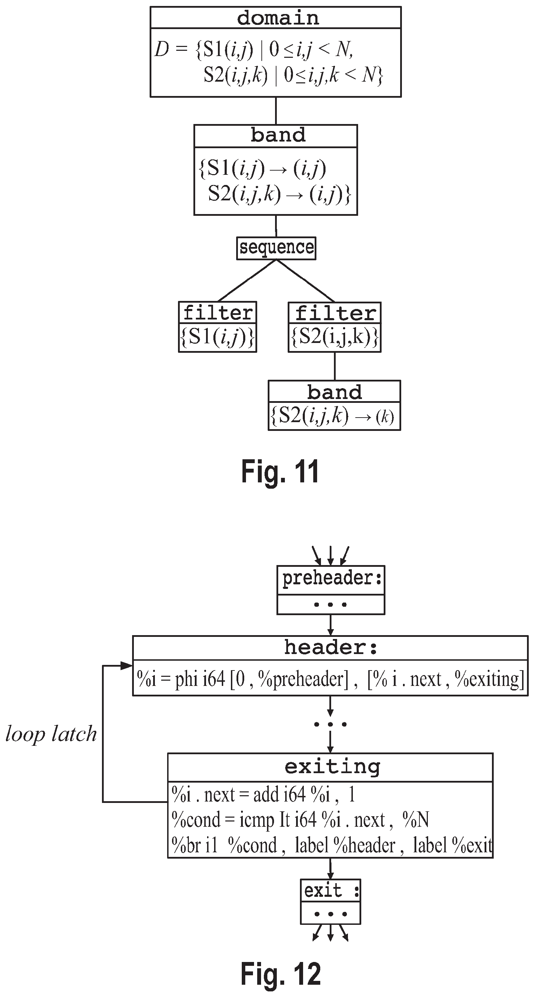

Fig. 10 illustrates this process for the schedule tree of the example in Fig. 11. Partitioning the first dimension in the outermost band node of the tree produces the tree shown in Fig. 10a. It shows the two newly inserted filters, using the partitioning parameter *R0* as a parametric lower and upper bound of the iterator respectively. Fig. 10b then shows the platform mapping for one of the two partitions. Introducing a new parameter *P0*, the inserted filters thus produce a GPU and a CPU path. The PPCG mapping algorithm is then invoked for the GPU path.

After all schedule transformations have been applied, we then convert the schedule tree back into LLVM IR. This procedure builds on top of the Polly-ACC code generator. Most of the implementation of generating code for partitioning and mapping is thus already done.

The Polly-ACC code generator is extended in two major aspects, because it was designed to deal with GPU offloading only. To incorporate CPU parallelism, we integrated the code generator with an existing, experimental Polly OpenMP backend. This backend emits code for the libgomp OpenMP runtime library. The second extension is the instrumentation of the parallelized program to interoperate with the autotuner. During mapping and code generation we extract a number of tunable parameters from the parallel program. First and foremost those are the partition splits, *Rᵢ* ∈ [0; 1), as well as the platform mappings *Pᵢ^{r}* ∈ {CPU, GPU} for i ∈ [0; d) and r ∈ {High, Low}, where *d* is the number of outer loops being parallelized. For example, when parallelizing two outer loops of a parallel source region, this yields six tunable parameters: Two partition splits plus platform mapping deciders for the four partitions. Consequently, multiple partitions may be offloaded to the same platform at runtime. This is a potential source of extra overhead, but it is unfortunately unavoidable, because the nonaffine constraints that would circumvent this are not expressible in the polyhedral framework.

Besides these work distribution parameters, we are able to elicit additional parameters from the mapping and code generation processes. Code generation for the CPU exposes the parameters ${T}_{i , r}^{CPU}$ controlling the number of threads, which are freely configurable at runtime. Tuning the GPU mapping on the other hand is unfortunately not as straightforward. Configuration options that affect mapping must be embedded within the polyhedral framework. An example is the number of threads per GPU block. Scheduling the threads is a tiling operation, i.e., the band is tiled into chunks of the number of threads. The point loop of the tiling then describes the kernel computations per thread, and the tile loop implements the execution of the distinct thread blocks. Making the number of threads parametric would turn this into a parametric tiling problem, which to date has no efficient general solution. Since we are not willing to forfeit tuning the GPU platform parameters, we are forced to follow an alternate route. To make the thread count tunable, we enumerate all configurations and generate the corresponding versions of the target region code statically. We express this directly in the schedule tree as a set node whose filter children represent the individual configurations. Thus, we obtain a single large schedule tree. Using the same approach, we also add parameters to determine the block height (*B_{i,r}*), to enable or disable promotion of local variables to shared memory (SM_{i,r}), and to unroll the loop moving data in and out of shared or local memory ( ${U}_{i , r}^{SM}$, ${U}_{i , r}^{T}$). The block height parameters *B_{i,r}* directly control the shape of a block of GPU threads. They thus affect the locality of accesses to global memory and the ability to coalesce accesses by the threads of
a warp. The full list of parameters as well as their default ranges is summarized in Table 3. The value ranges of the block size and height parameters are not exhaustive. The chosen ranges are a trade-off between covering a sufficiently large area of the possible space and the number of versions we need to generate.

**Table 3**

| **T** | **Class** | **Range** | **Semantics** |
|---|---|---|---|
| *Work distribution* | | | |
| *Rᵢ* ${P}_{i}^{r}$ ${R}_{i} ∈ \left[0, 1\right) ⊂ ℝ , i ∈ \left[1, d\right] ⊂ ℤ$ | Ratio | | Partitioning |
| | Nominal | ${P}_{i}^{r} ∈ \left\{CPU, GPU\right\}$ *, r* ∈ {*High, Low*} | Platform Mapping |

| *GPU Platform Parameters* | | | |
|---|---|---|---|
| *GPU* ${T}_{i , r}^{GPU}$ ${T}_{i , r}^{GPU} = 32 k , k ∈ \left[1, 8\right] ⊂ ℤ$ | Ratio | | GPU Block Size |
| *B_{i,r}* | Ratio | *B* = 2*^{k}*, $k ∈ \left[0, 5\right] ⊂ ℤ$ | GPU Block Height |
| *SM_{i,r}* ${U}_{i , r}^{SM}$ | Nominal | *SM_{i,r}* ∈ {true, false} | Shared Memory |
| ${U}_{i , r}^{SM} ∈ \left\{true, false\right\}$ | Nominal | | Unroll Shared Accesses |
| ${U}_{i , r}^{T}$ ${U}_{i , r}^{T} ∈ \left\{true, false\right\}$ | Nominal | | Unroll Tile Accesses |

| *CPU Platform Parameters* | | | |
|---|---|---|---|
| ${T}_{i , r}^{CPU}$ ${T}_{i , r}^{CPU} ∈ \left[1, cores\right] ⊂ ℤ$ | Ratio | | CPU Threads |

The polyhedral model fails to represent parallelizable loops in some cases. By relaxing its constraints, however, it is sometimes still possible to analyze the loops and detect data parallelism. Two examples for when that happens are function calls and inner loops without static control. Function calls are not modelled by the polyhedral model because the instructions within the function cannot be scheduled.

Polyhedral compilers usually first inline functions and erase the function call because of this. For us that would however require speculatively inlining all function calls just to be able to detect parallelism, which would be incredibly expensive. Loops without static control on the other hand are not representable in a polyhedral framework at all. However, when only parallelization is the goal, such loops might be benign: If such loops access no memory or only memory that is provably local, parallelization remains unaffected. Therefore, when polyhedral modelling fails we fall back onto a second analysis and transformation pipeline, using classical dependence testing and ad hoc transformations.

In this section we introduce the pipeline, the analyses performed by the compiler to detect parallelism, and the platform specific program transformations.

The first step in parallelizing a given program is to detect the parts of the program that are parallelizable. In the present invention, we focus on finding only data parallel loops during this phase. The scope can be extended to also support loops containing reductions, which can be seen as a special case of data parallelism with a relaxed constraint on data dependences. On top of the restriction to data parallelism, we impose further constraints on the loops we analyse to simplify the implementation.

Most importantly, we only consider top-level loops as candidates. Secondly, we assume loops have a particular structure in the control flow graph. The expected structure is illustrated in Fig. 12: the loop must be defined by a single-entry single-exit control flow subgraph, meaning there is a single basic block outside of the loop whose only successor is the loop header block and vice versa for the exit block. Further, there must be a unique exiting block, which branches to the exit and the header blocks. Consequently, the exiting block cannot be the loop header block. Note that this structural restriction is generally weak, since most loops can be normalized to take this form. A noteworthy counter example however is a loop that has multiple exit blocks, which are basic blocks outside of the loop to which the loop body may jump. There is no universal way to merge these blocks. Lastly, we require that the outermost loop exhibits static control. The trip count, i.e., the number of iterations, must be statically computable. To be precise, this trip count may be either a constant value, or a provably loop invariant variable. For all loops that pass these checks, the compiler performs its parallelism detection analysis. This is a classical dependence analysis, attempting to disprove loop carried data dependences. The LLVM framework contains various such analyses. The compiler extends the existing facilities of the LLVM framework to support interprocedural analysis. It performs dependence analysis in loops which contain function calls. To describe the effect of a call, we summarize all functions called within the candidate loop. Function summaries are effectively exhaustive lists of all memory accesses within the function that affect its pointer arguments or global variables. These accesses are precisely those that a caller is potentially able to observe. In general, summarizing requires over-approximating the accessed ranges since accurate alias analysis is in practice unavailable: When analyzing a memory access, it is often not exactly clear which argument or variable is read or written. In the worst case, summaries must assume that a function reads or writes every byte of memory in the program. That may for instance happen when accesses occur indirectly, that is, through pointers loaded from arguments or global variables. With the help of summaries, function calls now are analyzable by expanding the summary at the call site, thus virtually "inlining" the function. To disprove the existence of any loop-carried dependences, the compiler extends LLVM's implementation of the dependence testing algorithm by Goff, Kennedy, and Tseng (Gina Goff, Ken Kennedy, and Chau-Wen Tseng. "Practical Dependence Testing". In: Proceedings of the ACM SIGPLAN 1991 Conference on Programming Language Design and Implementation. PLDI '91. New York, NY, USA: ACM, 1991, pp. 15-29) to support summaries.

To widen its applicability, the compiler was extended to support for a parallelism scheme that in fact exhibits loop-carried dependences: parallel reductions. Parallel reductions differ from simple data parallelism in that they allow for the presence of specific data dependences, for which the values read and written to a conflicting memory location are dependent only via associative operations. A typical example of this is the summation of all elements of an array into an output variable. The output variable is read every iteration, incremented by an array element and written back into the same location. If the increment operator is associative, this operation may be executed in parallel. Because reductions can be seen as a slightly degenerated form of data parallelism, we support it as well.

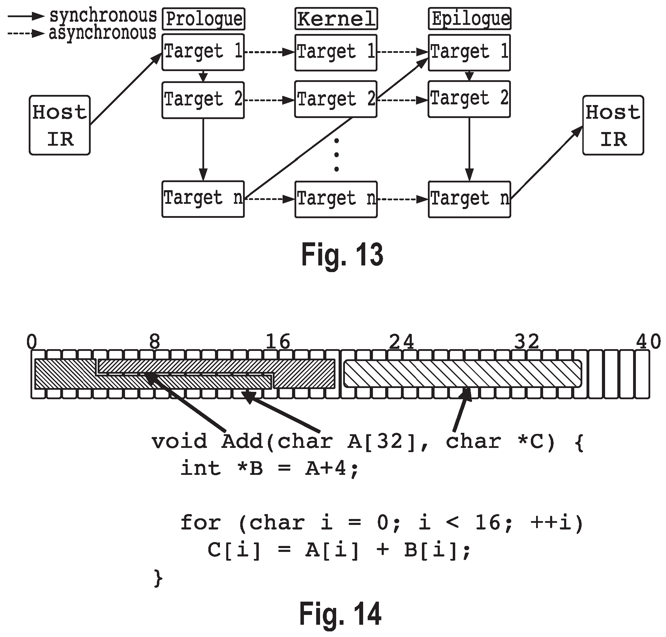

Having detected parallelizable loops, the compiler then generates the parallel code. The code generation is implemented by an extensible collection of target plugins. A target plugin's purpose is to produce target platform specific code as well as the management code required to offload the computation. The compiler then essentially becomes a driver for the transformations implemented by the plugins. Each plugin must thus emit three pieces of code: the prologue, the target region, and the epilogue. The interplay between these sections and the targets is shown in Fig. 13, which expresses synchronous operations as solid arrows, and asynchronous operations as dashed arrows. In the prologue, targets are expected to set up target platform memory and asynchronously execute the target region.

This potentially entails allocating space for the data accessed within the target region, including both arrays and scalar variables, and initiating data transfers. If host and target platform share the same physical memory, however, this step may be omitted. The compiler processes the prologues of the individual targets in order, followed by all the epilogues. In the epilogue phase, targets await their target region's completion and post-process the results, if necessary. Post-processing can for example be necessary for parallelized reduction. They may do so asynchronously to overlap compute and all data transfers. When transforming loops that additionally contain reductions, the epilogues additionally aggregate the reduction results for the per-target slices of the work.

Currently, we have implemented two primary target plugins, namely for CUDA and OpenMP targets.

In the following, we briefly discuss a design and implementation. Lastly, we describe the target specific tuning parameters the plugins expose, as well as how we model dynamic workload partitioning.

With regard to the OpenMP target plugin, targeting OpenMP on the CPU is straightforward. Because of the shared memory, no complex management of allocations is required. To interoperate with the OpenMP library API, the plugin needs to outline the target region code into a separate function which will be called by the OpenMP runtime. Outlining mainly involves substituting the original boundary checks for checks against the boundaries for the chunk of iterations per OpenMP thread, and passing scalar variables and array pointers into the target region function. Hence, in the prologue, the target plugin copies scalars and pointers and invokes the OpenMP runtime. The epilogue merely requires waiting for the threads to finish.

With regard to the CUDA target plugin, in most systems, host and GPU do not share memory. Exceptions are mobile graphics units and system-on-a-chip platforms, which we do not consider further here. Consequently, a major task of the CUDA target plugin is managing allocations and data transfers between the target platform and host. Unlike for the OpenMP target, we need to transfer both scalar variables as well as full arrays to the GPU. The number of scalar variables is statically known, which makes copying easy. On the other hand, both size and location of arrays are dynamic properties. Worse, both may change at runtime, and although the size of an array may be constant, the amount of data that needs to be transferred is not. On the one hand, the required data amount varies because of changing inputs to the program or parallelized region that affect the size of the array. On the other hand, changes are also caused by changes in the workload distribution due to tuning, which means that the changes are frequent. The CUDA target plugin thus manages memory dynamically through the runtime system further detailed below.

Having allocated and copied all data onto the GPU, the prologue then executes the target region, which is implemented as a CUDA kernel. Lastly, the prologue also initializes the transfer of the results back from the GPU device into the host memory. Besides allocations, all operations performed in the prologue are asynchronous with respect to the host, but strictly in order with respect to each other. Thus, CUDA API calls for copying to the device, launching the CUDA kernel, and copying from the device do not wait for the respective operation to complete. Waiting then happens in the epilogue, which synchronizes the host thread with the completion of the final copy.

For a given source region, the system creates a single tuner instance that we refer to as the tuning context for the region. For this instance, it inserts a special prologue and epilogue, which are executed before all target plugin prologues and after all epilogues, respectively. In these sections, the runtime environment invokes the tuner. The prologue updates the configuration of all tuning parameters in this context and starts the time measurement, the epilogue stops the time measurement and updates the configuration.

The runtime system performs three primary tasks: Managing and asynchronously executing target regions, managing memory allocations and transfers, and interfacing between the parallelized application and the tuner. The compiler links it into the generated
binaries automatically. Target region management on the host side currently only has to deal with CUDA kernels. The compiler translates the kernel into CUDA PTX, a CUDA-specific assembly code, and embeds it directly into the parallelized binary.

To launch the kernel, the runtime system loads the assembly code and JIT compiles it for the CUDA driver. The result is cached for future executions. Once compiled, the kernel can be launched. Device-side memory is managed by a custom dynamic memory allocator. The allocator is part of the runtime system and maintains a single continuous chunk of memory. In the prologue, in which the sizes of all required array slices are known dynamically, the allocator is invoked to remap all arrays accessed in the target region into the managed chunk, growing it if required. If host pointers point to overlapping regions of memory, the allocator automatically merges their mappings accordingly.

Fig. 14 shows an example of this process. The allocator has allocated a contiguous array of 40 bytes. Mapping the arrays *A,B*, and *C* into this memory occupies only 34 bytes. Even though the size of *A* is 32 bytes, and the size of *C* is unknown, the loop will access only 16 bytes of *C*, and 20 bytes of *A*, namely once 16 bytes through *A* directly at offset 0, and once 16 bytes indirectly through *B* at offset 4. To compute the mapping, the allocator represents every array *Aᵢ* as a triple (*Addr_{Ai}, Size_{Ai} , Offset_{Ai}*). *Offset_{Ai}* is initially 0. Sorting these triples in ascending lexicographic order, subsequent tuples for *Aᵢ* and *Aⱼ* are merged if and only if *Addr_{Ai} + Size_{Ai} > Addr_{Aj}* . If the inequality holds, then *Aᵢ* and *Aⱼ* overlap in memory. Upon merging, we set *Offset_{Aj} = Addr_{Aj} - Addr_{Ai}* and *Addr_{Aj} = Addr_{Ai}*. The merged triples can then be trivially mapped onto the contiguous space, growing the allocation if necessary.

Lastly, the runtime system's tuning interface implements interoperation with the library. It maintains a registry of instantiated and running tuners, and provides an interface to that registry to the parallelized program. Finally, it also implements an algorithm to compute loop iteration bounds for the target region execution.

The vast majority off approaches to automatic parallelization or automatic offloading rely on heuristics, cost models, and machine and performance models to make tuning decisions. With the present compiler and autotuning system we combine both techniques. The autotuner allows clients to reject configurations without actually measuring them. In the compiler, we use this mechanism to bridge between static performance models and autotuning. For this purpose, the compiler includes a small embedded DSL compiler which developers may use to implement rejection rules. An example for such a rule can
be as simple as ${C}_{{P}_{i}} = = 1 \to {ComputeVolume}_{C} > Threshold .$

ComputeVolume here is a performance model predicting the number of dynamic instructions executed in the source region. Assuming every instruction's execution takes the same amount of time, the compute volume is an accurate estimate of the time required to execute the source region. When the ComputeVolume models the target region on the other hand, it additionally depends on the tuning parameters. That allows us to make a-priori runtime predictions for the transformed and tuned program. The heuristic implemented by the simple rule above can intuitively be interpreted as "Only execute this region on the GPU if in this configuration it will perform enough computations". As a proof-of-concept, we implemented the rule above in the compiler.

Besides the ComputeVolume, the compiler embeds multiple similar analytical models into the application during transformation. That includes the number of load and store instructions executed, and the ArithmeticIntensity. The latter describes the ratio between the ComputeVolume of the source region and the amount of memory it accesses. The ArithmeticIntensity is thus a metric for the number of operations performed per byte of memory transferred. In general, the analytical models are parametric. For example, the number of load instructions executed by the source region depends on the number of loop iterations. This number generally depends on the input of the program or the current region. Consequently, the compiler cannot evaluate the models statically and has to defer that to the program's execution. For every model, the compiler generates code to compute its value at program runtime. The models are then evaluated at runtime as needed. Additionally, because they are parametric we can exploit the models for a second important purpose. The ComputeVolume in combination with the numbers of loads and stores provide an approximation of the runtime of the parallelized loop. This means that the parameters in these expressions directly influence the loop runtime. Because the parameters by construction are program variables, they are perfect candidates to serve as indicators to hybrid autotuning. Once the models have been computed, the compiler thus extracts all their parameters and registers them with the autotuner accordingly.

Two mechanisms for deriving analytical models from the input program are supported: based on the polyhedral model, or based on classical interprocedural data flow analysis if the source region is not representable polyhedrally. In this case, we count the dynamic instructions of a region recursively. For instance, the instruction count of a loop is the instruction count of its body multiplied by the number of loop iterations. Often, however, this number does not satisfy the static control criterion. That is, it is neither constant nor a provably invariant variable. In this case, we underestimate the instruction count. As a consequence, evaluating the model does not yield an exact value, but a lower bound on the specific count, which is sufficient for our users of the models. We perform this approximation whenever exact counting is impossible, in particular for for and while loops with undecidable iteration counts, if conditionals with different instruction counts in their branches, and calls to functions that cannot be analyzed interprocedurally. If, however, the polyhedral model is applicable to the source, approximating the count is unnecessary and we can determine exact instruction counts. Using libbarvinok, we directly obtain the analytical models from the polyhedral description of the source and target regions. This library provides an implementation of Barvinok's algorithm, which counts the number of points in an integer polyhedron efficiently.

Generating code for the analytical model expressions is straightforward. Both the data flow analysis and the polyhedral model produce piecewise polynomial expressions, parametric in the program arguments and, if modelling the target region, also the tuning parameters.

Preferred aspects of the invention
1. A method of configuring program parameters during run-time of a computing program for computation in a heterogeneous computing system, the method comprising: receiving a transformation of the computing program, the transformation comprising one or more computing applications;
   generating for each computing application one or more tuning parameters, the one or more tuning parameters being categorized into classes; and
   for a computing application to be optimized, recurringly during run-time adjusting one or more tuning parameters of the computing application, executing the computing application using the adjusted one or more tuning parameters, obtaining a performance metric for the execution of the computing application using the adjusted one or more tuning parameters and determining if the adjusted one or more tuning parameters provide an improvement with respect to the performance metric and whether a termination criterion has been met for ending the adjusting,
   wherein an indicator characteristic of a dynamic state of the computing application being optimized is stored, the indicator being used in the optimization to determine whether a known optimization is available for the dynamic state indicated by the stored indicator.
2. The method according to aspect 1, wherein the method further comprises generating the transformation by a compiler adapted to evaluate the computing program to determine computing applications which may be executed in parallel by different processing units.
3. The method according to aspects 1 or 2, wherein the optimization is performed using a tuning routine selected from a model-based prediction process and an online search process.
4. The method according to aspect 3, wherein the online search process is used to provide training data to update the model-based prediction process.
5. The method according to any preceding aspects, wherein the one or more tuning parameters are used to determine if the optimization procedure can be performed in a restricted search space.
6. The method according to aspect 2, wherein the transformation is generated using a polyhedral parallelization compiler.
7. The method according to aspect 6, wherein the polyhedral parallelization compiler transforms source code into an intermediate representation and further transforms the intermediate representation into binary code suitable for execution on computing platforms forming the heterogeneous computing system.
8. A computing entity programmed to optimize a computing application by recurringly during run-time adjusting one or more tuning parameters of the computing application, executing the computing application using the adjusted one or more tuning parameters, obtaining a performance metric for the execution of the computing application using the adjusted one or more tuning parameters and determining if the adjusted one or more tuning parameters provide an improvement with respect to the performance metric and whether a termination criterion has been met for ending the adjusting,
   wherein an indicator characteristic of a dynamic state of the computing application being optimized is stored, the indicator being used in the optimization to determine whether a known optimization is available for the dynamic state indicated by the stored indicator.
9. The computing entity according to aspect 8, wherein the computing entity is adapted to perform the optimization using a tuning routine selected from a model-based prediction process and an online search process.
10. The computing entity according to aspect 9, wherein the computing entity is adapted to use the online search process to provide training data to update the model-based prediction process.
11. The computing entity according to any one of aspects 8 to 10, wherein the computing entity is adapted to use one or more tuning parameters to determine if the optimization procedure can be performed in a restricted search space.

## Claims

1. A method of configuring program parameters during run-time of a computing program for computation in a heterogeneous computing system comprising CPU cores and GPU cores, the method comprising:
receiving a transformation of the computing program, generated by a compiler, the transformation comprising a computing application;
generating for the computing application one or more tuning parameters;
and for the computing application to be optimized, during run-time:
storing an indicator characteristic of a dynamic state of the computing application being optimized;
detecting a change in the dynamic state based on the stored indicator;
in response to detecting the change, determining whether the dynamic state indicated by the changed indicator was previously observed and a corresponding configuration of the one or more tuning parameters was memorized;
if the dynamic state was previously observed, retrieving the memorized configuration for that dynamic state;
if the dynamic state was not previously observed, querying a trained predictor to obtain a predicted configuration for that dynamic state;
adjusting the one or more tuning parameters of the computing application using the retrieved memorized configuration or the predicted configuration;
executing the computing application using the adjusted one or more tuning parameters and obtaining a performance metric for the execution; and
determining if the adjusted one or more tuning parameters provide an improvement with respect to the performance metric and whether a termination criterion has been met for ending the adjusting.

2. The method according to claim 1, wherein the steps of claim 1 performed for the computing application to be optimized are repeated recurringly during run-time.

3. The method according to one of the preceding claims, wherein the transformation comprises one or more further computing applications executable in parallel with the computing application by the CPU cores and the GPU cores.

4. The method according to one of the preceding claims, wherein the one or more tuning parameters are categorized into classes, and wherein the adjusted one or more tuning parameters are obtained using a search algorithm selected according to the class to which a tuning parameter belongs.

5. The method according to one of the preceding claims, wherein the querying of the predictor and the retrieving of the memorized configuration are each selected from a tuning routine comprising a model-based prediction process and an online search process.

6. The method according to claim 5, wherein the online search process is used to provide the training samples to update the model-based prediction process.

7. The method according to one of the preceding claims, wherein the one or more tuning parameters are used to determine whether the adjusting is performed in a restricted search space.

8. The method according to one of the preceding claims, wherein the predictor comprises a nearest neighbour prediction model.

9. The method according to claim 4, wherein the search algorithm is selected from a group consisting of a Nelder-Mead algorithm, an ε-Greedy algorithm, and a genetic algorithm.

10. The method according to claim 2, wherein the recurring repetition of the steps during run-time comprises operating in an exploration mode, in which a plurality of configurations of the one or more tuning parameters are sampled, or in an exploitation mode, in which a single configuration update is performed.

11. The method according to claim 10, wherein, upon detecting a further change in the dynamic state while operating in the exploration mode, a current search state is saved, and the search is continued when a previously indicated dynamic state recurs.

12. The method according to one of the preceding claims, wherein the stored indicator represents an input size of the computing application.

13. The method according to one of the preceding claims, wherein the heterogeneous computing system further comprises at least one of a field programmable gate array, a digital signal processor, or a quantum computing unit.

14. The method according to claim 3, wherein the transformation is generated using a polyhedral parallelization compiler.

15. The method according to one of the preceding claims, further comprising rejecting a candidate configuration of the one or more tuning parameters without executing the computing application using that candidate configuration, based on a prediction that the candidate configuration would result in non-optimal performance.

16. A computing entity programmed to optimize a computing application executable in parallel on CPU cores and GPU cores of a heterogeneous computing system, by, during run-time:
storing an indicator characteristic of a dynamic state of the computing application being optimized;
detecting a change in the dynamic state based on the stored indicator;
in response to detecting the change, determining whether the dynamic state indicated by the changed indicator was previously observed and a corresponding configuration of one or more tuning parameters of the computing application was memorized;
if the dynamic state was previously observed, retrieving the memorized configuration for that dynamic state;
if the dynamic state was not previously observed, querying a trained predictor to obtain a predicted configuration for that dynamic state;
adjusting the one or more tuning parameters of the computing application using the retrieved memorized configuration or the predicted configuration;
executing the computing application using the adjusted one or more tuning parameters and obtaining a performance metric for the execution; and
determining if the adjusted one or more tuning parameters provide an improvement with respect to the performance metric and whether a termination criterion has been met for ending the adjusting.
